# EUROPÄISCHE PATENTANMELDUNG

(11) **EP 0 578 282 A1**
(43) Veröffentlichungstag der Anmeldung: **12.01.1994**
(21) Anmeldenummer: 93113906.7
(22) Anmeldetag: 12.09.1991
(51) Int. Cl.: F16L 47/00

(54) **Sanitär- und Heizungsrohrsystem, vollständig oder überwiegend bestehend aus Kunststoff**

(30) Priorität: 10.05.1991 DE 9105824 U; 15.11.1990 DE 9015675 U; 10.05.1991 DE 9105823 U; 24.04.1991 DE 9105038 U; 26.04.1991 DE 9105171 U
(62) Teilanmeldung aus: 91115490.4
(71) Anmelder: RAFELD KUNSTSTOFFTECHNIK GmbH & Co. KG, 87640 Ebenhofen (DE)
(72) Erfinder: Rafeld, Karl, D-87640 Ebenhofen (DE)
(74) Vertreter: Kern, Wolfgang, Dipl.-Ing.

(57) **Zusammenfassung**

Ein Sanitär- und Heizungsrohrsystem, das vollständig oder überwiegend aus Kunststoff, insbesondere Polypropylen, besteht und für die Wasserversorgung dient, ist mit Absperrventilen (1) aus Kunststoff versehen, die einen kunststoffumgossenen, metallenen Ventilsitz (6) zum Einbau in Rohrleitungen aufweisen, sowie zwei hintereinanderliegende Rohrverbindungsmuffenstücke (2, 3) und eine dazwischenliegende, den Ventilsitz (6) aufnehmende Ventilkörperaufnahmehülse (5) mit Innengewinde, in das der Ventilkörper einschraubbar ist, wobei die Ventilkörperaufnahmehülse ein Drehkörper mit zylindrischem Umriß ist, der auf einem Teil seiner zylindrischen äußeren Oberfläche (8) mit quer zu seiner Längsachse (9) verlaufenden, mit Hilfe des Ventilkörpers verschließbaren Durchflußbohrungen (10, 11) versehen ist und auf anderen Teilen seiner Oberfläche mit einer Verdrehsicherung (15) sowie mit Abdichtungselementen (13) gegen Flüssigkeitsleckage aus den Rohrverbindungsmuffenstücken (2, 3).

## Beschreibung

Die Erfindung betrifft ein Sanitär- und Heizungsrohrsystem, vollständig oder überwiegend bestehend aus Kunststoff, insbesondere Polypropylen, für die Wasserversorgung mit Absperrventilen aus Kunststoff, die einen kunststoffumgossenen, metallenen Ventilsitz zum Einbau in Rohrleitungen aufweisen, und aus zwei hintereinanderliegenden Rohrverbindungsmuffenstücken und einer dazwischen liegenden, den Ventilsitz bildenden Ventilkörperaufnahmehülse mit Innengewinde, in das der Ventilkörper einschraubbar ist.

Derartige Kunststoffventile oder kunststoffummantelte Vertile, die einen metallenen Ventilsitz umschließen, auf den das Kunststoffmaterial der Hülse aufgespritzt oder aufgegossen worden ist, weisen zwei wesentliche Nachteile auf, die darin bestehen, daß der metallene Ventilsitz ebenfalls als T-Stück ausgebildet ist und damit eine relativ komplizierte geometrische Form aufweist, die einen nicht unerheblichen fertigungstechnischen und Bearbeitungsaufwand erfordert. Diese T-Form dient dem Ziel, den Ventilsitkörper im ihn umschließenden Kunststoffmaterial fest zu verankern.

Der andere Nachteil in darin zu sehen, daß die Dichtigkeit des Ventilsitzkörpers innerhalb des ihn umgebenden Kunststoffmaterials zu wünschen übrig läßt, weil sich aufgrund der beim Abkühlen des auf den metallenen Ventilsitzkörper aufgespritzten oder aufgegossenen Kunststoffmaterials entstehenden Schrumpfspannungen zwischen siener äußeren Oberfläche und dem Durchflußquerschnitt der beiden Rohrverbindungsmuffenstücken Kriechwege für die Flüssigkeit ausbilden, die dazu führen, daß Flüssigkeit aus dem Übergangsstück über die Ventilsitzoberfläche hinweg im Bereich der den Ventilkörper aufnehmenden Öffnung des Ventilsitzes nach außen dringt.

Die Aufgabe der Erfindung besteht deshalb darin, das Absperrventil der genannten Art so auszubilden, daß die obigen Nachteile beseitigt werden und sowohl eine Senkung der Fertigungskosten als auch eine verbesserte Betriebssicherheit, insbesondere Dichtigkeit des Übergangsstücks erreicht werden.

Diese Aufgabe wird erfindungsgemäß dadurch gelöst, daß die metallene Ventilkörperaufnahmehülse ein Drehkörper mit zylindrischem Umriß ist, der auf einem Teil seiner zylindrischen äußeren Oberfläche mit quer zu seiner Längsachse verlaufenden, mit Hilfe des Ventilkörpers verschließbaren Durchflußbohrungen versehen ist und auf anderen Teilen seiner Oberfläche mit einer Verdrehsicherung sowie mit Abdichtungselementen gegen Flüssigkeitsleckage aus den Rohrverbindungsmuffenstücken.

Durch diese Konstruktion wird zwischen der metallenen Ventilkörperaufnahmehülse und dem ihn umgebenden Kunststoffmuffenkörper, der aus den beiden Rohrverbindungsmuffenstücken besteht, eine drehfeste und leckagesichere Verbindung geschaffen, ohne daß es hierfür der Ausbildung des Ventilsitzkörpers als T-Stück bedarf.

Gemäß einer vorteilhaften Ausgestaltung der Erfindung ist die zylindrische Oberfläche des Umrisses der Ventilkörperaufnahmehülse im Bereich ihrer dem geschlossenen Hülsenboden gegenüberliegenden Öffnung, in die der Ventilkörper einschraubbar ist, mit umlaufenden Dichtungsnuten oder -rillen als Abdichtungselement versehen, in die das Kunststoffmaterial beim Umspritzen der Ventilkörperaufnahmehülse mit demselben eindringt.

Des wetieren hat sich besonders bewährt, die Außenseite des Bodens der Ventilkörperaufnahmehülse mit Vertiefungen in Form von Schlitzen und Aussparungen zur Bildung einer Verdrehsicherung zu versehen.

Die Erfindung wird nachfolgend an Hand des in der Zeichnung dargestellten Ausführungsbeispiels näher erläutert. In der Zeichnung zeigen:

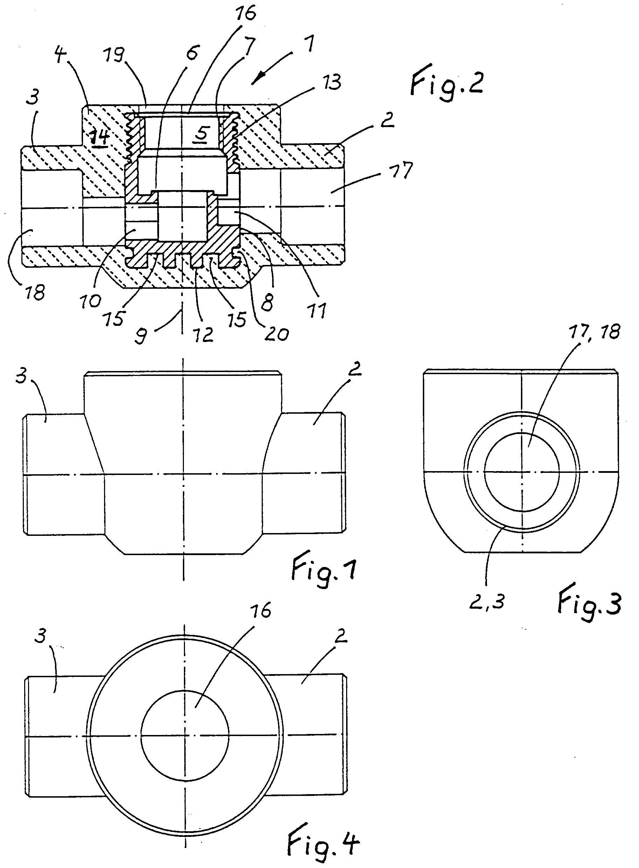

- Fig. 1: eine Seitenansicht eines Absperrventils;
- Fig. 2: eine Längsschnittansicht des Absperrventils von Fig. 1;
- Fig. 3: eine Stirnansicht des Absperrventils von Fig. 1, und
- Fig. 4: eine Draufsicht des Absperrventils von Fig. 1.

Das in den Zeichnungsfiguren dargestellte Absperrventil 1 besteht aus Kunststoff, insbesondere Polypropylen, und enthält einen metallenen Ventilsitz 6, der mit dem genannten Kunststoff durch Umspritzen oder Umgießen fest verbunden ist. Dieses Absperrventil dient zum Einbau in Rohrleitungen für den Sanitär- und Heizungsbereich. Zu diesem Zweck weist es zwei in einer geraden Linie hintereinanderliegende Rohrverbindungsmuffenstücke 2, 3 auf in deren Bohrungen 17, 18 Kunststoffrohre eingeschweißt werden. Zwischen den beiden Rohrverbindungsmuffenstücken 2, 3 befindet sich ein Muffenkörper 4 mit einer senkrecht zu den Bohrungen 17, 18 verlaufenden Bohrung 19, die eine den metallenen Ventilsitz 6 enthaltende Ventilkörperaufnahmehülse 5 aufweist, welche im Bereich ihrer oberen Öffnung 16 mit einem Innengewinde 7 versehen ist, in das der nicht dargestellte Ventilkörper eingeschraubt werden kann.

Die metallene Ventilkörperaufnahmehülse 5 ist ein Drehkörper mit zylindrischem Umriß, der auf einem Teil seiner zylindrischen Oberfläche 8 mit quer zu seiner Längsachse 9 verlaufenden und mit Hilfe des Ventilkörpers verschließbaren Durchflußbohrungen 10, 11 versehen ist, die in die Bohrungen 17 bzw. 18 des Absperrventils übergehen.

Um zu verhindern, daß die das Absperrventil durchströmende Flüssigkeit auf der äußeren Oberfläche der Ventilkörperaufnahmhülse 6 im Bereich der Öffnung 16 nach außen tritt, also ein Leckagestrom entsteht, ist die zylindrische Oberfläche 8 in diesem Bereich mit umlaufenden Dichtungsnuten 13 oder -rillen vesehen, in die das Kunststoffmaterial 14 beim Umspritzen oder Umgießen der Hülse eingetreten ist und die ihrer Form nach auch so geartet sind, daß die beim Abkühlen des Kunststoffmaterials auftretenden Spannungen nicht dazu führen, daß sich das Kunststoffmaterial aus diesen Nuten oder Rillen löst. Zu diesem Zweck ist der Querschnitt der Dichtungsnuten oder -rillen 13 konisch oder V-förmig.

Zur Bildung einer Verdrehsicherung für die Ventilkörperaufnahmehülse 5, welche bewirkt, daß sich diese Hülse beim Ein- und Ausschrauben des Ventilkörpers nicht innerhalb des Kunststoffmaterials des Absperrventils dreht, ist die Außenseite des der Öffnung 16 gegenüberliegenden Bodens 12 der Hülse 5 mit Vertiefungen 15 in Form von Schlitzen oder Aussparungen in der Oberfläche dieser Bodenaußenseite versehen, in die das Kunststoffmaterial beim Aufspritzen oder Aufgießen eingedrungen ist.

Des weiteren ist im Bereich des Hülsenbodens 12 auf der zylindrischen äußeren Oberfläche 8 der Hülse eine umlaufende Ringnut 20 vorgesehen, in die das Kunststoffmaterial ebenfalls eingedrungen ist und die dadurch verhindern soll, daß die Ventilkörperaufnahmehülse in Richtung ihrer Längsachse 9 aus dem Kunststoff herausgezogen wird.

## Patentansprüche

1. Sanitär- und Heizungsrohrsystem, vollständig oder überwiegend bestehend aus Kunststoff, insbesondere Polypropylen, für die Wasserversorgung, mit Absperrventilen aus Kunststoff, die einen kunststoffumgossenen, metallenen Ventilsitz zum Einbau in Rohrleitungen aufweisen, und aus zwei hintereinanderliegenden Rohrverbindungsmuffenstücken und einer dazwischenliegenden, den Ventilsitz bildenden Ventilkörperaufnahmehülse mit Innengewinde, in das der Ventilkörper einschraubbar ist, dadurch **gekennzeichnet,** daß die metallene Ventilkörperaufnahmehülse (5) ein Drehkörper mit zylindrischem Umriß ist, der auf einem Teil seiner zylindrischen äußeren Oberfläche (8) mit quer zu seiner Längsachse (9) verlaufenden, mit Hilfe des Ventilkörpers verschließbaren Durchflußbohrungen (10, 11) versehen ist und auf anderen Teilen seiner Oberfläche mit einer Verdrehsicherung (15) sowie mit Abdichtungselementen (13) gegen Flüssigkeitsleckage aus den Rohrverbindungsmuffenstücken (2, 3).

2. System nach Anspruch 1, dadurch **gekennzeichnet,** daß die Ventilkörperaufnahmehülse (5) an ihrer zylindrischen äußeren Oberfläche (8) im Bereich ihrer Öffnung (16) mit umlaufenden Dichtungsnuten (13) oder -rillen versehen ist, in die das Kunststoffmaterial (14) beim Umgießen der Ventilkörperaufnahmehülse eindringt.

3. System nach Anspruch 1 oder 2, dadurch **gekennzeichnet,** daß der der Öffnung (16) der Ventilkörperaufnahmehülse (5) gegenüberliegende Hülsenboden (12) an seiner Außenseite mit Vertiefungen (15) in Form von Schlitzen und Aussparungen versehen ist, in die das Kunststoffmaterial zur Bildung einer Verdrehsicherung eindringt.

4. System nach einem der Ansprüche 1 bis 3, dadurch **gekennzeichnet,** daß im Bereich des Bodens (12) der Ventilkörperaufnahmehülse (5) auf ihrer zylindrischen äußeren Oberfläche (8) eine Ringnut (20) ausgebildet ist, in die das Kunststoffmaterial (14) eingedrungen ist und die eine zugfeste Verbindung zwischen dem Kunststoffmaterial und der Ventilkörperaufnahmehülse schafft.

5. System nach einem der Ansprüche 1 bis 4, dadurch **gekennzeichnet,** daß der Querschnitt der Dichtungsnuten oder -rillen (13) konisch oder V-förmig ist.
